# EUROPEAN PATENT SPECIFICATION

(11) **EP 3 126 454 B1**
(45) Date of publication and mention of the grant of the patent: **15.08.2018**
(21) Application number: 15712169.0
(22) Date of filing: 27.03.2015
(51) Int. Cl.: C09D 5/00

(54) **ANTI-FINGERPRINT COATING COMPOSITION, PRODUCTS THEREFROM, METHOD FOR FORMING THE SAME, AND USE THEREOF**
FINGERABDRUCKFESTE BESCHICHTUNGSZUSAMMENSETZUNG, PRODUKTE DARAUS, VERFAHREN ZUR HERSTELLUNG DAVON UND VERWENDUNG DAVON
COMPOSITION DE REVÊTEMENT ANTI-EMPREINTES DIGITALES, PRODUITS AINSI OBTENUS, PROCÉDÉ DE FABRICATION ASSOCIÉ ET SON UTILISATION

(30) Priority: 31.03.2014 WO PCT/CN2014/074371; 27.06.2014 EP 14174651
(43) Date of publication of application: 08.02.2017
(73) Proprietor: Akzo Nobel Coatings International B.V., 6824 BM Arnhem (NL)
(72) Inventor: TIANG, Jen Shueng, Shanghai 201600 (CN); LU, Junbiao, Shanghai 201600 (CN)
(74) Representative: Akzo Nobel IP Department
(86) International application number: PCT/EP2015/056671
(87) International publication number: WO 2015/150244

(56) References cited:
- DE-A1- 10 159 288
- US-A1- 2004 071 974
- US-A1- 2006 205 870
- US-A1- 2009 205 536
- US-A1- 2010 304 086
- US-A1- 2012 154 811

## Description

### Technical Field

The present invention relates to compositions and methods for making a coating with anti-fingerprint performance, and the coated articles resulting thereof. More particularly, the present invention relates to compositions and methods for making a coating layer comprising a stationary phase impregnated with a mobile phase having the ability to diffuse and fade fingerprints, in addition to optionally having a strong liquid repellency that minimizes the deposition of fingerprints and eases the cleaning of the coated articles.

### Background

Consumer electronics devices such as mobile phones, tablets, and laptop computers are becoming increasingly indispensable. Surfaces of these devices, including touch screen, display panel, and housing, are easily smudged by fingerprints after frequent touching, making them look dirty and unappealing. The problem is especially more challenging for smooth and glossy finishes, as fingerprints are visually more obvious on these surfaces than on rough and matte finishes.

Fingerprint is a complex mixture of hundreds of compounds, which may vary slightly among individuals. The main components of this emulsion are sweat and sebum. Sweat comprises water and a variety of organic matters and inorganic salts. Sebum is composed of various lipids and oily substances. Depending on the amount of sweat, fingerprint is initially made up of nearly 99% of water (The Fingerprint Sourcebook, U.S. Department of Justice, 2011). Water evaporates away after some time upon contact with the surface. Oily and inorganic residues remain and need to be cleaned off manually.

It is commonly known in the art that a coating of low surface energy can impart fingerprint resistance. Water and oil tend to form large contact angles when deposited onto such a coating, which is said to be both hydrophobic (water repellent) and oleophobic (oil repellent). The coating usually comprises a fluorine- or silicone-containing compound. Further enhancement in hydrophobicity and oleophobicity can be attained by incorporating surface texture or roughness. For example, Application WO 2010/147738 discloses a super non-wetting, anti-fingerprint coating comprising perfluoroalkyl-Si and silica nanoparticles with micro- and nanoscale surface roughness. However, the coating is rough, opaque, and limited to glass substrates.

Owing to the low surface tension of sebum, there is presently no coating material with surface energy that is sufficiently low to completely prevent fingerprints from sticking to a surface, particularly if it is a smooth surface devoid of any textural features. Thus, current art is primarily directed to providing an anti-fingerprint coating that only acts to minimize the deposition of fingerprints and ease the cleaning of fingerprints. For example, U.S. Patent No. 7,153,563 discloses a hard coat film comprising 100 parts by weight of a curable resin and 0.1 to 10 parts by weight of a non-ionic surfactant with a hydrophile-lipophile balance (HLB) value of 2 to 15. The objects of the hard coat film are limited to suppressing the attachment of fingerprints and enabling the easy wiping of fingerprints.

Current art is also directed to providing a coating that minimizes the appearance of fingerprints. Application WO2012/087661 discloses a coating composition comprising a polymerizable resin and a non-ionic unpolymerizable surfactant having an HLB value ranging from 2 to 6 that exhibits reduced fingerprint visibility. The surfactant is a lipophilic liquid.

US2009/205536 A1 discloses a coating composition for low refractive index antireflection layer. The coating composition comprises zeolite nanocrystals, a zeolite precursor sol, and a solvent mixture. Optionally, the coating composition can further comprise a wetting agent, such as a surfactant, for better wetting a substrate to be coated by the coating composition.

US2006/205870 A1 discloses compositions including aqueous dispersions, comprising multifunctional particles that comprise diverse reactive groups, for example, an epoxy-functional and acid-functional polymer particle for use in coating compositions. Such coatings can be used to protect various substrates including inkjet prints.

DE10159288 A1 discloses a coating for impregnating textiles and paper and for antibacterial surfaces comprising an inorganic or inorganic-organic matrix with fluorinated particulate filler.

There is still a need to develop a coating with improved anti-fingerprint performance. It is important to design the coating by considering the composition of fingerprint, which is normally a water-rich emulsion when initially deposited. None of the patents has disclosed a composition or a method for making a coating layer comprising a stationary phase impregnated with a mobile phase that can readily diffuse and fade this initially water-rich emulsion.

### Description of the Invention

The present invention is directed to anti-fingerprint coating compositions, the coating layers and coated articles formed therefrom, the preparation methods therefor, and the uses thereof. The coating compositions and methods according to the present invention are capable of forming a coating layer with anti-fingerprint performance. The coating layer according to the present invention comprises a stationary phase impregnated with a mobile phase that can diffuse and fade fingerprints, in addition to optionally having strong liquid repellency that minimizes the deposition of fingerprints and eases the cleaning of the coated articles.

The present invention exploits the chemistry of the interaction of a mobile phase with fingerprints to cause the fingerprints to diffuse and fade. The mobile phase is impregnated in a suitable amount in the stationary phase that can migrate to the top surface to interact with fingerprints. The composition of the fingerprint, which is initially a water-rich emulsion, is the selection basis for the mobile phase. The mobile phase is a liquid comprising one or more surfactants that interact readily with the emulsion, facilitating the diffusion and fading of fingerprints.

An advantageous aspect of the present invention is the synergistic action of the mobile phase and the stationary phase. Preferably, the stationary phase according to the present invention may have low surface energy, which provides for high liquid repellency that minimizes fingerprint deposition and eases cleaning. The stationary phase may also comprise channels of a size from nano-to micro-scale that serve both as a reservoir for containing the mobile phase and as a network for the transport and migration of the mobile phase to the top surface. Due to low surface energy of the stationary phase, fingerprints tend to form discrete beads or droplets instead of continuous films when initially deposited onto the surface of the stationary phase. The synergistic effect is manifested by the diffusion of the droplets into many tiny droplets, and then the shrinking and fading of the droplets over time.

When used herein, the term "nano- to micro-scale" is meant to include a length scale from 1 nm to 100 µm.

In one aspect of the invention, a composition for forming a coating on top of a substrate is provided. The composition according to the present invention comprises:
100 parts by weight of a binder; and
10 to 50 parts by weight of a hydrophilic liquid comprising one or more surfactants with an HLB value of 10 or greater.

Unless otherwise specified, the term "hydrophile-lipophile balance" or "HLB" is a measure of the degree of hydrophilicity or lipophilicity of a surfactant or a blend of surfactants, according to the definition by Griffin (W. C. Griffin, J. Soc. Cosmet. Chem., 1954, 249-259). Typically, a hydrophilic surfactant has an HLB value of 10 or greater, whereas a lipophilic surfactant has an HLB value smaller than 10.

The quantity and the type of surfactants are selected in accordance with the desired diffusion and fading effectiveness, as well as acceptable performance in other attributes like hardness, transparency, gloss, and the like of the resulting coating layer. Preferably, at least one of the surfactants is a nonionic surfactant, which is an effective mobile phase for diffusing and fading fingerprints according to the present invention. For fingerprints with high content of sweat or water, a liquid comprising one or more hydrophilic surfactants with an HLB value of 10 or greater is used. In certain embodiments, if the fingerprints are very oily, the composition may further comprise 10 to 40 parts by weight of one or more lipophilic surfactants with an HLB value of greater than 6 to 10. Suitable surfactants include but are not limited to alcohol ethoxylates, alcohol alkoxylates, phenol ethoxylates, nonyl phenol ethoxylates, amine ethoxylates, amide ethoxylates, alkylpolyglucosides, polyalcohols, polyoxylated alcohols, fatty acid esters, amine and amide derivatives, ethylene oxide/propylene oxide copolymers, and silicone surfactants. Exemplary commercially available surfactants include but are not limited to Berol 260, 266, and 840 from Akzo Nobel Surface Chemistry LLC; Ethylan 185, 1003 1005, 1008, and 25-3 from Akzo Nobel Surface Chemistry LLC; Neodol 91-2.5, 91-5, 91-6, 91-8, and 91-8.4 from Shell Chemicals; Lutensol ON 30, 50, 66, 70, and 80 from BASF; KF-640, KF-642, and KF-643 from Shin-Etsu Chemical Co., Ltd.

The binder may be a monomer, oligomer or polymer selected from the group of resins comprising acrylates, acrylics, alkyds, amines, amides, aminos, isocyanates, polyurethanes, epoxies, acrylic/epoxy hybrids, epoxy esters, polyesters, polyethers, polyvinyl alcohols, phenolics, polyvinyl acetates, styrenes, styrene-butadiene copolymers, silicone, polyvinyl butyrals, hydrocarbon resins, or a mixture thereof. In a preferred embodiment, the binder is selected from a group of meth(acrylate) resins, which may be a mixture of monomers and oligomers having various degrees of functionality (mono-, di-, tri-, tetra-, penta-, and hexafunctionality) and functional groups like urethane (meth)acrylate, polyurethane (meth)acrylate, ester (meth)acrylate, polyester (meth)acrylate, epoxy (meth)acrylate, polyether (meth)acrylate, amine modified polyether(meth)acrylate, and acrylic (meth)acrylate. Exemplary commercially available (meth)acrylate resins include but are not limited to hexafunctional urethane acrylate, dipentaerythritol hexaacrylate, dipentaerythritol pentaacrylate, ethoxylated pentaerythritol tetraacrylate, ditrimethylolpropane tetraacrylate, pentaerythritol tetraacrylate, pentaerythritol triacrylate, trimethylolpropane triacrylate, ethoxylated pentaerythritol triacrylate, tris(2-hydroxyethyl)isocyanurate triacrylate, propoxylated glycerol triacrylate, propoxylated trimethylolpropane triacrylate, ethoxylated trimethylolpropane triacrylate, hexamethylene diacrylate, poly(ethylene)glycol diacrylate, bisphenol-A diacrylate, ethoxylated bisphenol-A diacrylate, 1,4-butanediol diacrylate, 1,6-hexanediol diacrylate, dipropylene glycol diacrylate, neopentylglycol diacrylate, ethoxylated neopentylglycol diacrylate, propoxylated neopentylglycol diacrylate, tripropylene glycol diacrylate, ethylene glycol diacrylate, bisphenol A diacrylate, 2-hydroxyethyl acrylate, 2-hydroxypropyl acrylate, 2-hydroxybutyl acrylate, isobonyl acrylate, alkyl acrylate, benzyl acrylate, phenyl acrylate, mixtures thereof, and the like.

In a preferred embodiment, the composition may comprise a low surface energy compound selected from fluorine-containing additives, which provides the resulting coating layer with easy-clean performance. Preferably, the fluorine-containing additive comprises at least a perfluoropolyether group. Exemplary commercially available fluorinated additives include but are not limited to Megaface RS-72-K, RS-75, RS-76-E, RS-76-NS, RS-90, F-555, F-558, F-571, and F-552 from DIC Corporation; OPTOOL DAC-HP and DSX from Daikin Industries, Ltd.; Fluorolink MD500, MD700, AD1700, 5101X, 5113X, S10, and Fomblin MD40 from Solvay; KY1203, KY164, and KY108 from Shin-Etsu Chemical Co., Ltd.

In certain embodiments, the composition may further comprise a dispersion of inorganic particles to improve hardness and enhance the formation of channels in the stationary phase. Examples of the inorganic particles include but are not limited to silica, alumina, zirconia, titania, vanadia, chromia, ceria, tin oxide, and mixtures thereof. The average particle size may range from 1 nm to 100 µm, and measurement of the particle size may be made using transmission electron microscopy. For coating of high gloss, the average particle size ranging from 1 to 200 nm is preferred. Particles of a size greater than 200 nm may be used for coating of low gloss. The dispersion medium may be any suitable organic solvents or water selected in accordance with the coating composition. The organic solvent is usually present in an amount of 15 to 90% by weight of the total dispersion. Exemplary commercially available nanoparticle dispersions include but are not limited to Organosilicasol IPA-ST, IPA-ST-L, IPA-UP, IPA-ST-ZL, MEK-ST, MEK-ST-L, MEK-ST-UP, MIBK-ST, MEK-EC-2102, MEK-EC-2104, MEK-AC-2202, MEK-AC-4101, and MIBK-SD from Nissan Chemical Industries, Ltd.; NanoBYK 3650, 3651, 3652, 3605, 3610, 3600, 3601, and 3602 from BYK-Chemie GmbH; Nanopol A710, A720, C764, C784, XP20/0166, XP20/0343, and XP21/1279 from Evonik Degussa GmbH; HighLink NanO G from Clariant; and mixtures thereof.

Organic solvents or water may be optionally added as diluent in suitable amount to adjust the coating composition to the appropriate concentration and viscosity. Examples of solvents include but are not limited to alcohols (methanol, ethanol, propanol, isopropyl alcohol, butanol), ketones (methyl isobutyl ketone, methyl ethyl ketone, dimethyl ketone, acetone), esters (ethyl acetate, normal butyl acetate, propylene glycol mono-methyl ether acetate), glycols (ethylene glycol), glycol ethers (ethylene glycol mono n-propyl ether, propylene glycol mono-methyl ether), aromatic hydrocarbons (toluene, xylene), aliphatic hydrocarbons (hexane, heptane, cyclohexane), cellosolves (ethyl cellosolve, butyl cellusolve), and mixtures thereof.

In certain embodiments, ultraviolet (UV) radiation is used for curing the coating composition, and the composition may contain one or more photo-initiators. Examples of photo-initiators include but are not limited to 2-hydroxy-2-methyl-1-phenyl-1-propane, 2,4,6-trimethylbenzoyl diphenyl phosphine, bis(2,4,6-trimethyl benzoyl)phenyl phosphine oxide, 1-hydroxycyclohexyl phenyl ketone, benzophenone, 2,2-dialkoxybenzophenone, acetophenone, and mixtures thereof.

Additives typically used to impart other desired properties may be optionally added to the coating composition. Examples include leveling agents, defoamers, absorbers, catalysts, initiators, stabilizers, biocides, matting agents, waxes, rheology modifiers, corrosion inhibitors, adhesion promoters, fire retardants, extenders, fillers, dyes, and pigments, and the like.

In another aspect of the present invention, accordingly, a coating layer is provided. The coating layer according to the present invention comprises:
a stationary phase formed with a binder;
a mobile phase prepared from a hydrophilic liquid comprising one or more surfactants with an HLB value of 10 or greater;
wherein the mobile phase is impregnated within the stationary phase.

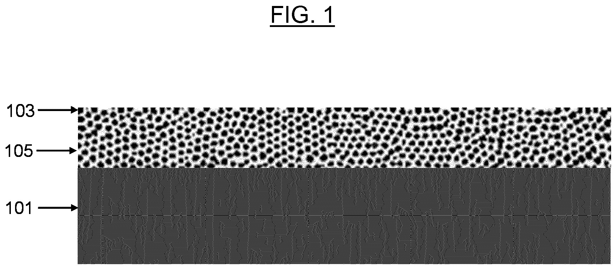

In accordance with certain embodiments, FIG. 1 shows a cross-sectional schematic drawing of an exemplary coating layer applied on top of a substrate 101. The coating layer comprises a stationary phase 103 impregnated with a mobile phase 105.

The components for forming the stationary phase and the mobile phase have the same meaning as defined above.

According to the invention, the mobile phase is a liquid comprising one or more hydrophilic surfactants with an HLB value of 10 or greater as defined above.

In certain embodiments, for very oily fingerprints, the mobile phase may further comprise 10 to 40 parts by weight of one or more lipophilic surfactants with an HLB value of greater than 6 to 10 as defined above.

In a preferred embodiment, the stationary phase may comprise a low surface energy compound selected from fluorine-containing additives as defined above, to provide the resulting coating layer with easy-clean performance.

In certain embodiments, the stationary phase may further comprise inorganic particles with a size ranging from 1 nm to 100 µm as defined above, to improve hardness and enhance the formation of channels in the stationary phase.

The thickness of the coating layer is preferably from 5 to 100 microns. In certain embodiments, the coating also has the advantage of being high gloss and transparent.

In yet another aspect of the invention, methods for forming an anti-fingerprint coating on top of a substrate, the use of the anti-fingerprint coating to diffuse and fade fingerprints, as well as methods for evaluating and improving the performance of diffusion and fading, are provided.

According to the present invention, the methods for forming an anti-fingerprint coating on top of a substrate comprise the steps of:
(a) preparing a composition according to the present invention;
(b) applying the composition on top of a substrate; and
(c) curing or drying the composition to form the coating layer on top of the substrate.

In certain embodiments, the coating composition according to the present invention may be directly applied on top of a variety of substrates, including but not limited to plastics (for example, polycarbonate, acrylonitrile-butadiene-styrene, polymethyl methacrylate, polyamide, polyimide, polyethylene, polypropylene, polyvinyl chloride, acrylics, polyester, epoxies, polystyrene, polyurethane, blends, and the like), metals and alloys (for example, stainless steel, aluminum, magnesium, and the like), glass (for example, soda lime, borosilicate, aluminum silicate, lead glass, and the like), ceramics, and composites.

In certain embodiments, the coating composition may be applied as a top coating layer or a clear coating layer over one or more coating layers already deposited onto the substrate. Unless otherwise defined, when used herein, the term "substrate" is meant to include both a substrate without any coating coated thereon, and a substrate that is already coated with one or more coating layers.

In certain embodiments, the coating composition may be applied on top of a substrate by conventional techniques, including but not limited to spray coating, dip coating, flow coating, spin coating, brushing, roll coating, flow coating, bar coating, and knife coating.

In certain embodiments, the coating composition may be dried at ambient or elevated temperatures or cured by conventional curing methods, such as thermal cure, ultraviolet or electron beam, to form a coating layer.

The method for diffusing and fading fingerprints according to the present invention comprises providing a coating layer formed according to the above-discussed methods to contact the fingerprints. Specifically, when in contact with fingerprints, the coating layer according to the present invention is capable of both diffusing and fading the fingerprints.

The method for evaluating and improving the anti-fingerprint performance of the coating layer according to the present invention comprises the steps of:
(a) contacting the fingerprints with the coating layer;
(b) recording and calculating the decrease in the number of fingerprint droplets, and/or the decrease in the total area of fingerprints over time; and
(c) evaluating and improving the performance of fingerprint fading according to the calculation results.

Specifically, the fingerprint-fading performance may be evaluated by depositing fingerprints onto the coating layer and recording the fading of the fingerprint droplets over time under an optical microscope with a magnification of 5x using a digital camera. The number and the total area of the fingerprint droplets may be computed from the digital images. In certain embodiments, the number of fingerprint droplets decreases by more than 30%, 52%, and 73% after 10 min, 1 h, and 6 h, respectively, and the total area of fingerprint droplets decreases by more than 1%, 5%, and 13% after 10 min, 1 h, and 6 h, respectively.

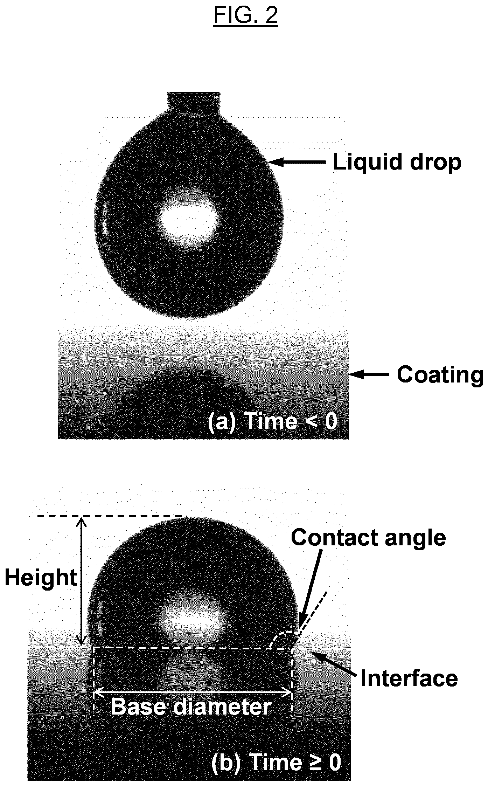

When used herein, the easy-clean performance of the coating layer is related to liquid repellency, which is typically evaluated by the measurements of water and tetradecane (oil) contact angles using an optical contact angle instrument. FIG. 2a shows a liquid drop that is about to be deposited onto the coating. FIG. 2b shows the drop sitting on top of the coating at the solid-liquid-air interface during the measurement. The diffusion and fading performance can be evaluated by recording the drop images over time and calculating the changes in the drop parameters like height, base diameter, and contact angle from the images. In certain embodiments, when initially deposited onto the coating layer, the water contact angle is at least 105°, and the tetradecane contact angle is at least 60°. These high values of contact angles indicate high water and oil repellency as well as good easy-clean performance. The changes in the drop parameters over time are due to the action of the mobile phase in diffusing and fading the liquid drop. Evaporation may also take place, but its rate is negligible especially for oil, and this effect can be accounted for when comparing to a control. In certain embodiments, for the case of water, relative to the initial values , the drop height decreases by a factor of 0.57, the base diameter increases by a factor of 1.46, and the contact angle decreases by a factor of 0.53 after 5 min. In certain embodiments, for the case of tetradecane, relative to the initial values, the drop height decreases by a factor of 0.95, the base diameter increases by a factor of 1.03, and the contact angle decreases by a factor of 0.94 after 5 min.

In still another aspect of the invention, articles coated with a coating layer according to the present invention are provided. The coating layer according to the present invention is suitable for use in, for example, consumer electronic devices, which have surfaces like housings, touch screens, and displays that are frequently touched by users' fingers. Specifically, the devices include but are not limited to mobile phones, tablets, personal computers, laptop computers, electronic readers, music players, computer accessories (monitors, mouse, keyboards, portable hard disks, printers), televisions, game consoles, global positioning system devices, wearable devices, and the like. Other applications include automotive interior and exterior parts, and home appliances.

### Description of Drawings

The above and other objectives, features, and advantages of the present invention will become more apparent to those of ordinary skill in the art by being described in embodiments thereof with reference to the accompanying drawings.
FIG. 1 is a cross-sectional schematic diagram of an exemplary coating layer applied on top of a substrate in accordance with an embodiment of the invention.
FIG. 2a shows a liquid drop that is about to be deposited onto an exemplary coating layer. FIG. 2b shows the drop sitting on top of an exemplary coating layer at the solid-liquid-air interface during the measurements of the drop height, base diameter, and contact angle.
FIGS. 3a-3c and 3d-3f show images of a water drop for Example 2 and Comparative Example 2 at times 0, 1, and 5 min, respectively. FIGS. 3g-3h show the normalized base diameter and normalized height of the water drop as a function of time for Example 2 and Comparative Example 2, respectively.
FIGS. 4a-4c and 4d-4f show images of a tetradecane (oil) drop for Example 2 and Comparative Example 2 at times 0, 1, and 5 min, respectively. FIGS. 3g-3h show the normalized base diameter and normalized height of the tetradecane drop as a function of time for Example 2 and Comparative Example 2, respectively.
FIGS. 5a-5c and 5d-5f show fingerprint images observed under optical microscope at a magnification of 5x at various times for Example 2 and Comparative Example 2, respectively.
FIGS. 6a and 6b show distribution of the fingerprint droplets at various times for Example 2 and Comparative example 2, respectively. FIGS. 6c and 6d show the number of fingerprint droplets and the total area of fingerprint droplets as a function of time for Example 2 and Comparative Example 2, respectively.

### Examples

The following examples are offered to illustrate, but not to limit the claimed invention.

### PREPARATION OF COATING COMPOSITIONS

### Example 1

146 g of a binder mixture (970-CJS-704, available from Akzo Nobel Coatings (Tianjin) Co. Ltd., comprising 100 g of binder, 40 g solvent, and 6 g of photoinitiator), 50 g of an ethoxylated alcohol with an HLB value of 10.5 (Berol 260, available from Akzo Nobel Surface Chemistry LLB), 50 g of a nanosilica dispersion (NanoBYK 3652, available from BYK-Chemie GmbH), 7 g of a fluorinated additive (Megaface RS-75, available from DIC Corporation), and 30 g of isopropyl alcohol were mixed and stirred for 10 minutes at room temperature. The resulting mixture was allowed to rest for 5 min.

### Comparative Example 1

146 g of a binder mixture coating solution (970-CJS-704, available from Akzo Nobel Coatings (Tianjin) Co. Ltd., comprising 100 g of binder, 40 g solvent, and 6 g of photoinitiator), 7 g of a fluorinated additive (Megaface RS-75, available from DIC Corporation), and 30 g of isopropyl alcohol were mixed and stirred for 10 minutes at room temperature. The resulting mixture was allowed to rest for 5 min.

### PREPARATION OF COATING LAYERS

### Example 2

The coating composition obtained in Example 1 was applied on top of a polycarbonate substrate by spray coating. The coating was baked at 60°C for 5 min before being cured twice by UV radiation at a line speed of 10 m/min and a light intensity of 1,000 mJ/cm². The cured coating layer has a film thickness of about 20 µm.

### Comparative Example 2

The procedure of Example 2 was repeated except for using the coating composition obtained in Comparative Example 1.

### EVALUATION OF PROPERTIES OF COATING LAYERS

The coating layers obtained from Example 2 and Comparative Example 2 were evaluated in accordance with the following methods.

### (a) Easy-clean performance using contact angle measurements and diffusion performance by drop analysis

Contact angle measurements were performed on the coating layers using an optical contact angle instrument OCA 20 from DataPhysics equipped with a digital camera and the SCA 20 software. First, a 4 µL drop of deionized water was applied to a fresh area on the coating layer, and images of the drop were recorded at a speed of 4 frames per second for 5 min by the software. The procedure was repeated for a 4 µL drop of tetradecane.

The drop images were analyzed using the SCA 20 software to determine the drop parameters like height, base diameter, and contact angle, as illustrated in FIG. 2b. These parameters can be normalized by dividing the value at a given time by that at time 0.

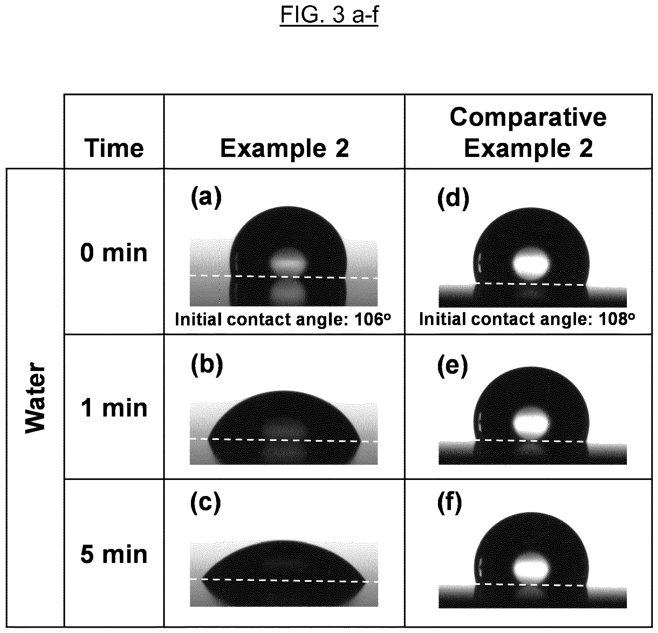

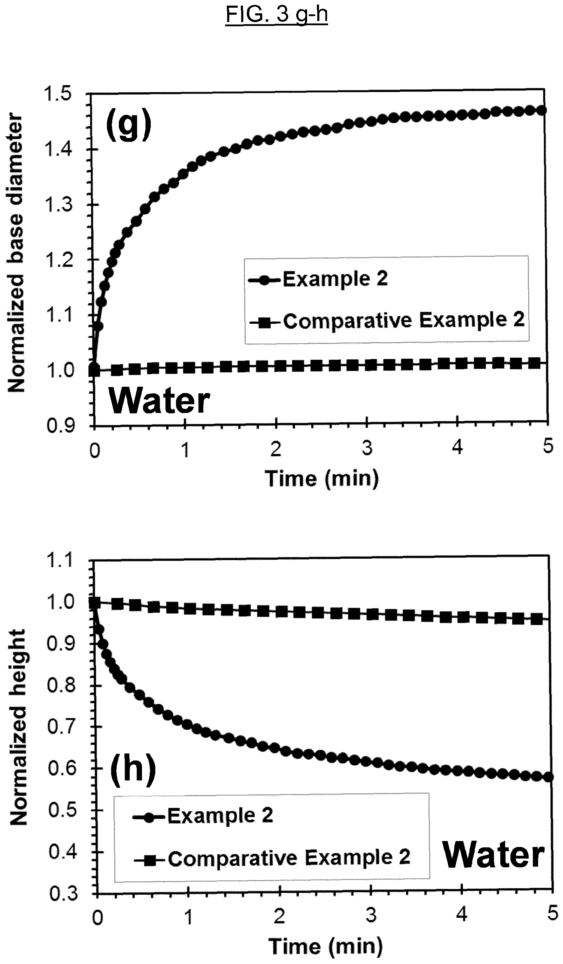

FIGS. 3a-3c and 3d-3f compare images of a water drop between Example 2 and Comparative Example 2 at times 0, 1, and 5 min, respectively. FIGS. 3g-3h compare the normalized base diameter and normalized height of the water drop as a function of time between Example 2 and Comparative Example 2, respectively. The initial water contact angles for Example 2 and Comparative Example 2 were similar, 106° and 108°, respectively. These values were quite high, indicating high hydrophobicity or water repellency. Minimal change in the drop shape was observed for Comparative Example 2 over time. By comparison, for Example 2, the water drop was found to diffuse quickly, as indicated by the sharp increase in the base diameter and the rapid decrease in both the height and contact angle with time.

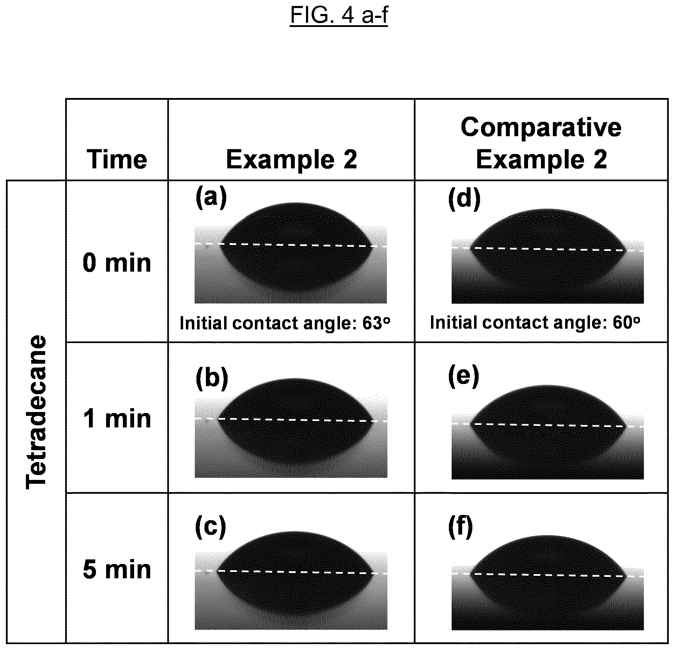

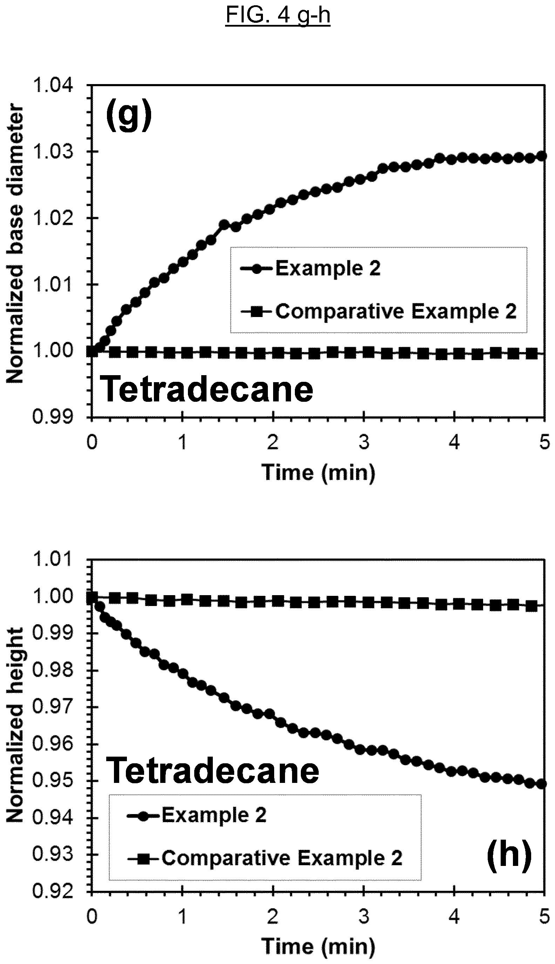

FIGS. 4a-4c and 4d-4f compare images of a tetradecane (oil) drop between Example 2 and Comparative Example 2 at times 0, 1, and 5 min, respectively. FIGS. 4g-4h compare the normalized base diameter and normalized height of the tetradecane drop as a function of time between Example 2 and Comparative Example 2, respectively. The initial tetradecane contact angles for Example 2 and Comparative Example 2 were similar, 63° and 60°, respectively. These values were quite high, indicating relatively high oleophobicity and a good easy-clean performance. No change in the drop shape was observed for Comparative Example 2 over time. By comparison, for Example 2, the tetradecane drop was found to diffuse slowly, as indicated by the slight increase in the base diameter and the small decrease in both the height and contact angle with time.

### (b) Measurement of fingerprint-fading performance

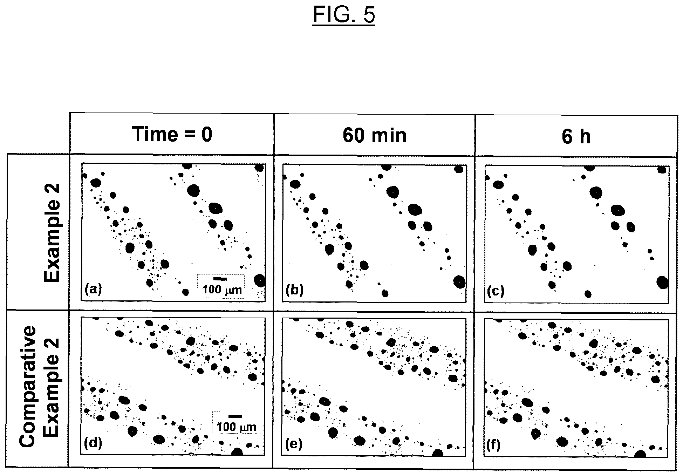

Fingerprints were deposited onto the coating layer, and images were recorded as a function of time under an optical microscope with a magnification of 5x using a digital camera. Comparison of the images in FIGS. 5a-5c and 5d-5f indicates shrinking and fading of some fingerprints over time in Example 2. By comparison, no change was observed for Comparative Example 2.

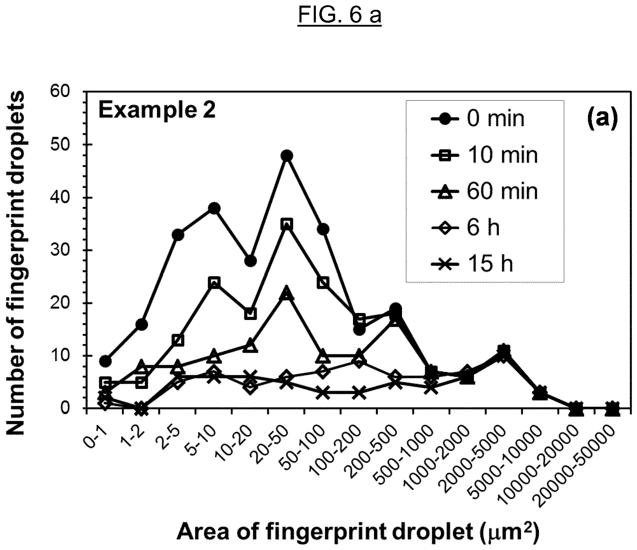

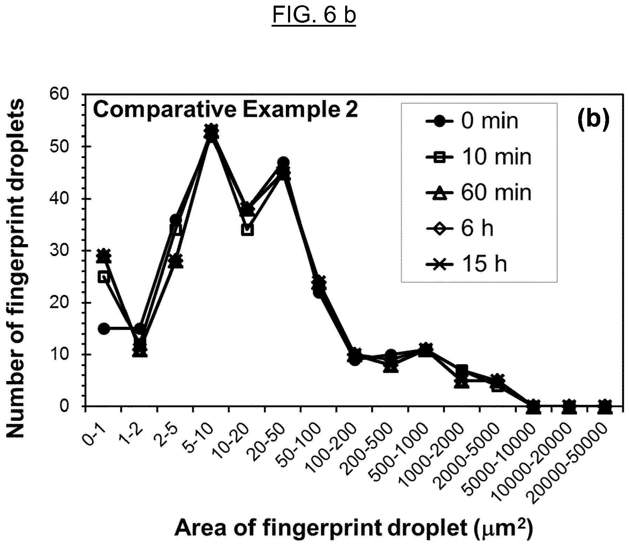

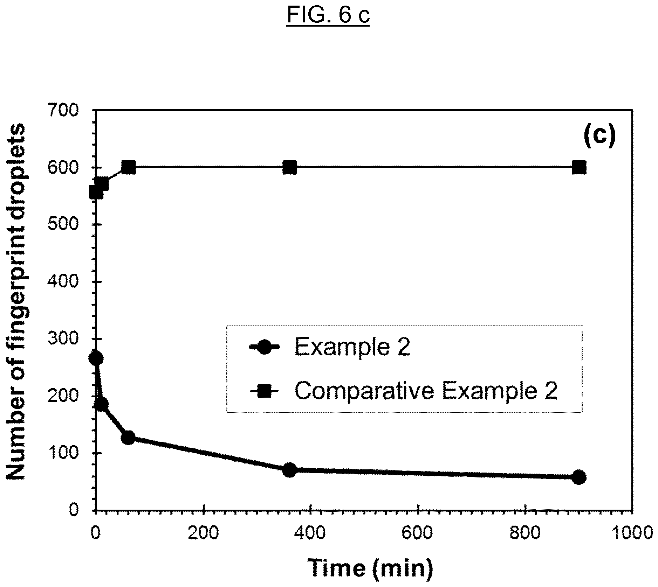

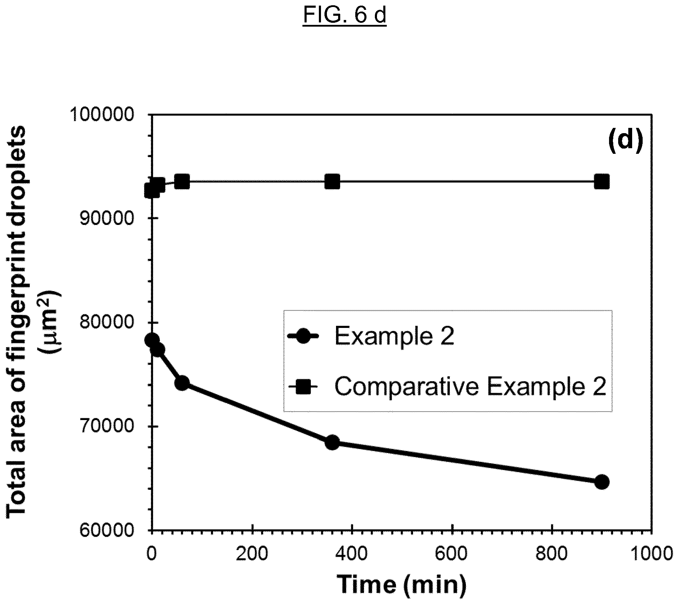

Analysis of the images was performed using the ImageJ 1.46r software from National Institute of Health. The number and the total area of the fingerprint droplets were measured and calculated using standard processing and particle measurement tools available in ImageJ. FIGS. 6a and 6b show the distribution of the fingerprint droplets at various times obtained from the calculation results for Example 2 and Comparative example 2, respectively. For Example 2, the fingerprint droplets were found to shrink, and small droplets were found to disappear with time. By comparison, little change was observed for Comparative Example 2 in FIG. 6b. FIGS. 6c and 6d compare the number of fingerprint droplets and the total area of fingerprint droplets as a function of time for Example 2 and Comparative Example 2, respectively. The fading performance can be quantitatively represented by both the ratio of the number of the fingerprint droplets at a given time to that at time 0 and the ratio of the total area of the fingerprint droplets at a given time to that at time 0. For Example 2, the number of fingerprint droplets was found to decrease by more than 30% (or to a ratio of 0.70), 52% (or to a ratio of 0.48), and 73% (or to a ratio of 0.27) after 10 min, 1 h, and 6 h, respectively, and the total area of fingerprint droplets was found to decrease by more than 1% (or to a ratio of 0.99), 5% (or to a ratio of 0.95), and 13% (or to a ratio of 0.87) after 10 min, 1 h, and 6 h, respectively. By comparison, minimal change was observed for Comparative Example 2 in FIGS. 6c and 6d.

## Claims

1. A composition for forming a coating on top of a substrate, wherein the composition comprises:
100 parts by weight of a binder; and
10 to 50 parts by weight of a hydrophilic liquid comprising one or more surfactants with an HLB value of 10 or greater.

2. The composition according to claim 1, wherein the composition further comprises 10 to 40 parts by weight of one or more surfactants with an HLB value of greater than 6 to10.

3. The composition according to claim 1, wherein the composition further comprises a low surface energy compound selected from fluorine-containing additives.

4. The composition according to any one of claims 1 to 3, wherein the composition further comprises a dispersion of inorganic particles with a size ranging from 1 nm to 100 µm, and selected from silica particles, alumina particles, zirconia particles, titania particles, vanadia particles, chromia particles, ceria particles, tin oxide particles, or a mixture thereof.

5. The composition according to any one of claims 1 to 4, wherein said binder is a monomer, oligomer or polymer selected from the group of resins comprising acrylates, acrylics, alkyds, amines, amides, aminos, isocyanates, polyurethanes, epoxies, acrylic/epoxy hybrids, epoxy esters, polyesters, polyethers, polyvinyl alcohols, phenolics, polyvinyl acetates, styrenes, styrene-butadiene copolymers, silicone, polyvinyl butyrals, hydrocarbon resins, or a mixture thereof.

6. The composition according to any one of claims 1 to 4, wherein said liquid is selected from alcohol ethoxylates, alcohol alkoxylates, phenol ethoxylates, nonyl phenol ethoxylates, amine ethoxylates, amide ethoxylates, alkylpolyglucosides, polyalcohols, polyoxylated alcohols, fatty acid esters, amine and amide derivatives, ethylene oxide/propylene oxide copolymers, silicone surfactants, or a mixture thereof.

7. A coating layer, which comprises:
a stationary phase formed with a binder;
a mobile phase prepared from a liquid comprising one or more
surfactants with an HLB value of 10 or greater;
wherein the mobile phase is impregnated within the stationary phase.

8. The coating layer according to claim 7, wherein said mobile phase further comprises one or more surfactants with an HLB value of greater than 6 to10.

9. The coating layer according to claim 7, wherein said stationary phase further comprises a low surface energy compound selected from fluorine-containing additives.

10. The coating layer according to any one of claims 7 to 9, wherein said stationary phase further comprises inorganic particles with a size ranging from 1 nm to 100 µm, and selected from silica particles, alumina particles, zirconia particles, titania particles, vanadia particles, chromia particles, ceria particles, tin oxide particles, or a mixture thereof.

11. The coating layer according to any one of claims 7 to 10, wherein said binder is a monomer, oligomer or polymer selected from the group of resins comprising acrylates, acrylics, alkyds, amines, amides, aminos, isocyanates, polyurethanes, epoxies, acrylic/epoxy hybrids, epoxy esters, polyesters, polyethers, polyvinyl alcohols, phenolics, polyvinyl acetates, styrenes, styrene-butadiene copolymers, silicone, polyvinyl butyrals, hydrocarbon resins, or a mixture thereof.

12. The coating layer according to any one of claims 7 to 10, wherein said liquid is selected from alcohol ethoxylates, alcohol alkoxylates, phenol ethoxylates, nonyl phenol ethoxylates, amine ethoxylates, amide ethoxylates, alkylpolyglucosides, polyalcohols, polyoxylated alcohols, fatty acid esters, amine and amide derivatives, ethylene oxide/propylene oxide copolymers, silicone surfactants, or a mixture thereof.

13. A method for forming an anti-fingerprint coating on top of a substrate, comprising the steps of:
(a) preparing a composition according to any one of claims 1 to 6;
(b) applying the composition on top of a substrate; and
(c) curing or drying the composition to form a coating layer on top of the substrate.

14. A method for diffusing and fading fingerprints, comprising providing a coating layer according to any one of claims 7 to 12 to contact the fingerprints.

15. A method for evaluating and improving the anti-fingerprint performance of a coating layer according to any one of claims 7 to 12, comprising the steps of:
(a) contacting fingerprints with the coating layer;
(b) recording and calculating the decrease in the number of fingerprint droplets over time, and/or the decrease in the total area of fingerprints over time; and
(c) evaluating and improving the performance of fingerprint fading according to the calculation results.

16. The method according to claim 14 or 15, wherein the number of fingerprint droplets decreases by more than 30% after 10 minutes, more than 52% after 1 hour, or more than 73% after 6 hours.

17. The method according to claim 14 or 15, wherein the total area of fingerprint droplets decreases by more than 1% after 10 minutes, more than 5% after 10 minutes, or more than 13% after 6 hours.

18. A method for evaluating and improving the anti-fingerprint performance of a coating layer according to any one of claims 7 to 12, comprising the steps of:
(a) contacting water or oil with the coating layer to form a drop thereon;
(b) recording and calculating the increase in the base diameter, the decrease in the height, and the decrease in the contact angle of the drop over time; and
(c) evaluating and improving the performance of diffusion and fading according to the calculation results.

19. An article coated with a coating layer according to any one of claims 7 to 12.

20. The article according to claim 19, wherein the article is selected from the group comprising consumer electronic devices including mobile phones, tablets, personal computers, laptop computers, electronic readers, music players, computer accessories, televisions, game consoles, global positioning system devices, wearable devices; as well as automotive parts; and home appliances.

## Patentansprüche

1. Zusammensetzung zur Herstellung einer Beschichtung auf einem Substrat, wobei die Zusammensetzung Folgendes umfasst:
100 Gewichtsteile eines Bindemittels und
10 bis 50 Gewichtsteile einer hydrophilen Flüssigkeit, umfassend ein oder mehrere Tenside mit einem HLB-Wert von 10 oder mehr.

2. Zusammensetzung nach Anspruch 1, wobei die Zusammensetzung weiterhin 10 bis 40 Gewichtsteile von einem oder mehreren Tensiden mit einem HLB-Wert von mehr als 6 bis 10 umfasst.

3. Zusammensetzung nach Anspruch 1, wobei die Zusammensetzung weiterhin eine Verbindung mit niedriger Oberflächenenergie umfasst, ausgewählt aus der Gruppe, bestehend aus fluorhaltigen Additiven.

4. Zusammensetzung nach einem der Ansprüche 1 bis 3, wobei die Zusammensetzung weiterhin eine Dispersion von anorganischen Partikeln mit einer Größe von 1 nm bis 100 µm umfasst, und ausgewählt aus Kieselsäurepartikeln, Aluminiumoxidpartikeln, Zirkonoxidpartikeln, Titanoxidpartikeln, Vanadiumoxidpartikeln, Chromoxidpartikeln, Ceroxidpartikeln, Zinnoxidpartikeln oder einer Mischung davon.

5. Zusammensetzung nach einem der Ansprüche 1 bis 4, wobei das Bindemittel ein Monomer, ein Oligomer oder ein Polymer ist, ausgewählt aus der Gruppe von Harzen, umfassend Acrylate, Acryle, Alkyde, Amine, Amide, Aminos, Isocyanate, Polyurethane, Epoxide, Acryl-/Epoxy-Hybride, Epoxyester, Polyester, Polyether, Polyvinylalkohle, Phenole, Polyvinylacetate, Styrole, Styrol-Butadien-Copolymere, Silikon, Polyvinylbutyrate, Kohlenwasserstoffharze oder eine Mischung davon.

6. Zusammensetzung nach einem der Ansprüche 1 bis 4, wobei die Flüssigkeit ausgewählt ist aus Alkoholethoxylaten, Alkoholalkoxylaten, Phenolethoxylaten, Nonyl-Phenol-Ethoxylaten, Aminethoxylaten, Amidethoxylaten, Alkylpolyglucosiden, Polyalkoholen, polyoxylierten Alkoholen, Fettsäureestern, Amin- und Amiderivaten, Ethylenoxid-/Propylenoxid-Copolymeren, Silikontensiden oder einer Mischung davon.

7. Beschichtung, die Folgendes umfasst:
eine stationäre Phase, die mit einem Bindemittel hergestellt wird;
eine mobile Phase, die aus einer Flüssigkeit hergestellt wird,
umfassend eine oder mehrere Tenside mit einem HLB-Wert von 10 oder mehr;
wobei die mobile Phase innerhalb der stationären Phase imprägniert ist.

8. Beschichtung nach Anspruch 7, wobei die mobile Phase weiterhin ein oder mehrere Tenside mit einem HLB-Wert von mehr als 6 bis 10 umfasst.

9. Beschichtung nach Anspruch 7, wobei die stationäre Phase weiterhin eine Verbindung mit niedriger Oberflächenenergie umfasst, die aus fluorhaltigen Additiven ausgewählt ist.

10. Beschichtung nach einem der Ansprüche 7 bis 9, wobei die stationäre Phase weiterhin anorganische Partikel mit einer Größe von 1 nm bis 100 µm und ausgewählt aus Kieselsäurepartikeln, Aluminiumoxidpartikeln, Zirkonoxidpartikeln, Titanoxidpartikeln, Vanadiumoxidpartikeln, Chromoxidpartikeln, Ceroxidpartikeln, Zinnoxidpartikeln oder einer Mischung davon, umfasst.

11. Beschichtung nach einem der Ansprüche 7 bis 10, wobei das Bindemittel ein Monomer, ein Oligomer oder ein Polymer ist, ausgewählt aus der Gruppe von Harzen, umfassend Acrylate, Acryle, Alkyde, Amine, Amide, Aminos, Isocyanate, Polyurethane, Epoxide, Acryl-/Epoxy-Hybride, Epoxyester, Polyester, Polyether, Polyvinylalkohle, Phenole, Polyvinylacetate, Styrole, Styrol-Butadien-Copolymere, Silikon, Polyvinylbutyrate, Kohlenwasserstoffharze oder eine Mischung davon.

12. Beschichtung nach einem der Ansprüche 7 bis 10, wobei die Flüssigkeit ausgewählt ist aus Alkoholethoxylaten, Alkoholalkoxylaten, Phenol-ethoxylaten, Nonyl-Phenol-Ethoxylaten, Aminethoxylaten, Amidethoxylaten, Alkylpolyglucosiden, Polyalkoholen, polyoxylierten Alkoholen, Fettsäureestern, Amin- und Amiderivaten, Ethylenoxid-/Propylenoxid-Copolymeren, Silikontensiden oder einer Mischung davon.

13. Verfahren zur Herstellung einer Anti-Fingerprint-Beschichtung auf einem Substrat, umfassend die folgenden Schritte:
(a) Herstellen einer Zusammensetzung nach einem der Ansprüche 1 bis 6;
(b) Auftragen der Zusammensetzung auf ein Substrat und
(c) Aushärten oder Trocknen der Zusammensetzung, um eine Beschichtung auf dem Substrat herzustellen.

14. Verfahren zum Diffundieren und Verblassen lassen von Fingerabdrücken, umfassend das Bereitstellen einer Beschichtung nach einem der Ansprüche 7 bis 12, um die Fingerabdrücke zu kontaktieren.

15. Verfahren zur Beurteilung und Verbesserung der Anti-Fingerprint-Performance einer Beschichtung nach einem der Ansprüche 7 bis 12, umfassend die folgenden Schritte:
(a) Inkontaktbringen der Fingerabdrücke mit der Beschichtung;
(b) Aufzeichnen und Berechnen der Abnahme der Zahl der Fingerabdruck-Tropfen im Laufe der Zeit und/oder der Abnahme der Gesamtfläche von Fingerabdrücken im Laufe der Zeit und
(c) Beurteilen und Verbessern der Performance des Verblassens von Fingerabdrücken nach den Berechnungsergebnissen.

16. Verfahren nach Anspruch 14 oder 15, wobei die Anzahl der Fingerabdruck-Tropfen nach 10 Minuten um mehr als 30%, nach 1 Stunde um mehr als 52% oder nach 6 Stunden um mehr als 73% abnimmt.

17. Verfahren nach Anspruch 14 oder 15, wobei die Gesamtfläche der Fingerabdruck-Tropfen nach 10 Minuten um mehr als 1%, nach 10 Minuten um mehr als 5% oder nach 6 Stunden um mehr als 13% abnimmt.

18. Verfahren zur Beurteilung und Verbesserung der Anti-Fingerprint-Performance einer Beschichtung nach einem der Ansprüche 7 bis 12, umfassend die folgenden Schritte:
(a) Inkontaktbringen von Wasser oder Öl mit der Beschichtung, um einen Tropfen darauf zu bilden;
(b) Aufzeichnen und Berechnen der Erhöhung des Basisdurchmessers, der Abnahme in der Höhe und der Abnahme im Kontaktwinkel des Tropfens im Laufe der Zeit und
(c) Beurteilen und Verbessern der Performance von Diffusion und Verblassen nach den Berechnungsergebnissen.

19. Gegenstand, der mit einer Beschichtung nach einem der Ansprüche 7 bis 12 beschichtet ist.

20. Gegenstand nach Anspruch 19, wobei der Gegenstand ausgewählt ist aus der Gruppe, umfassend Geräte der Unterhaltungselektronik einschließlich Mobiltelefone, Tablets, PCs, Laptops, elektronische Lesegeräte, Musik-Player, Computerzubehör, Fernseher, Spielkonsolen, GPS-Geräte, tragbare Geräte sowie Automobilteile und Haushaltsgeräte.

## Revendications

1. Composition pour former un revêtement sur une partie supérieure d'un substrat, dans laquelle la composition comprend :
100 parties en poids d'un liant ; et
10 à 50 parties en poids d'un liquide hydrophile comprenant un ou plusieurs tensioactif(s) ayant une valeur HLB supérieure ou égale à 10.

2. Composition selon la revendication 1, dans laquelle la composition comprend en outre 10 à 40 parties en poids d'un ou de plusieurs tensioactif(s) ayant une valeur HLB supérieure à 6 et inférieure ou égale à 10.

3. Composition selon la revendication 1, dans laquelle la composition comprend en outre un composé à faible énergie de surface choisi parmi des additifs contenant du fluor.

4. Composition selon l'une quelconque des revendications 1 à 3, dans laquelle la composition comprend en outre une dispersion de particules inorganiques de taille comprise entre 1 nm et 100 µm, et choisies parmi des particules de silice, des particules d'alumine, des particules de zircone, des particules de dioxyde de titane, des particules d'oxyde de vanadium, des particules d'oxyde de chrome, des particules d'oxyde de cérium, des particules d'oxyde d'étain ou un mélange de celles-ci.

5. Composition selon l'une quelconque des revendications 1 à 4, dans laquelle ledit liant est un monomère, un oligomère ou un polymère choisi dans le groupe de résines comprenant des acrylates, des acryliques, des alkydes, des amines, des amides, des aminés, des isocyanates, des polyuréthanes, des époxydes, des hybrides acryliques/époxy, des esters époxy, des polyesters, des polyéthers, des alcools polyvinyliques, des dérivés phénoliques, des polyacétates de vinyle, des styrènes, des copolymères de styrène-butadiène, la silicone, des polybutyrals de vinyle, des résines hydrocarbonées ou un mélange de ceux-ci.

6. Composition selon l'une quelconque des revendications 1 à 4, dans laquelle ledit liquide est choisi parmi des éthoxylates d'alcool, des alcoxylates d'alcools, des éthoxylates de phénol, des éthoxylates de nonylphénol, des éthoxylates d'amine, des éthoxylates d'amide, des alkylpolyglucosides, des polyalcools, des alcools polyoxylés, des esters d'acides gras, des dérivés d'amine et d'amide, des copolymères d'oxyde d'éthylène/oxyde de propylène, des tensioactifs de silicone ou un mélange de ceux-ci.

7. Couche de revêtement, qui comprend :
une phase stationnaire formée avec un liant ;
une phase mobile préparée à partir d'un liquide comprenant un ou
plusieurs tensioactif(s) ayant une valeur HLB supérieure ou égale à 10 ;
dans laquelle la phase mobile est imprégnée dans la phase stationnaire.

8. Couche de revêtement selon la revendication 7, dans laquelle ladite phase mobile comprend en outre un ou plusieurs tensioactif(s) ayant une valeur HLB supérieure à 6 et inférieure ou égale à 10.

9. Couche de revêtement selon la revendication 7, dans laquelle ladite phase stationnaire comprend en outre un composé à faible énergie de surface choisi parmi des additifs contenant du fluor.

10. Couche de revêtement selon l'une quelconque des revendications 7 à 9, dans laquelle ladite phase stationnaire comprend en outre des particules inorganiques de taille comprise entre 1 nm et 100 µm, et choisies parmi des particules de silice, des particules d'alumine, des particules de zircone, des particules de dioxyde de titane, des particules d'oxyde de vanadium, des particules d'oxyde de chrome, des particules d'oxyde de cérium, des particules d'oxyde d'étain ou un mélange de celles-ci.

11. Couche de revêtement selon l'une quelconque des revendications 7 à 10, dans laquelle ledit liant est un monomère, un oligomère ou un polymère choisi dans le groupe de résines comprenant des acrylates, des acryliques, des alkydes, des amines, des amides, des aminés, des isocyanates, des polyuréthanes, des époxydes, des hybrides acryliques/époxy, des esters époxy, des polyesters, des polyéthers, des alcools polyvinyliques, des dérivés phénoliques, des polyacétates de vinyle, des styrènes, des copolymères de styrène-butadiène, la silicone, des polybutyrals de vinyle, des résines hydrocarbonées ou un mélange de ceux-ci.

12. Couche de revêtement selon l'une quelconque des revendications 7 à 10, dans laquelle ledit liquide est choisi parmi des éthoxylates d'alcool, des alcoxylates d'alcools, des éthoxylates de phénol, des éthoxylates de nonylphénol, des éthoxylates d'amine, des éthoxylates d'amide, des alkylpolyglucosides, des polyalcools, des alcools polyoxylés, des esters d'acides gras, des dérivés d'amine et d'amide, des copolymères d'oxyde d'éthylène/oxyde de propylène, des tensioactifs de silicone ou un mélange de ceux-ci.

13. Procédé de formation d'un revêtement anti-empreintes digitales sur une partie supérieure d'un substrat, comprenant les étapes consistant :
(a) à préparer une composition selon l'une quelconque des revendications 1 à 6 ;
(b) à appliquer la composition sur une partie supérieure d'un substrat ; et
(c) à durcir ou sécher la composition pour former une couche de revêtement sur une partie supérieure du substrat.

14. Procédé de diffusion et d'estompage d'empreintes digitales, comprenant la fourniture d'une couche de revêtement selon l'une quelconque des revendications 7 à 12 pour venir en contact avec les empreintes digitales.

15. Procédé d'évaluation et d'amélioration de la performance anti-empreintes digitales d'une couche de revêtement selon l'une quelconque des revendications 7 à 12, comprenant les étapes consistant :
(a) à mettre en contact des empreintes digitales avec la couche de revêtement ;
(b) à enregistrer et calculer la diminution du nombre de gouttelettes d'empreintes digitales au fil du temps, et/ou la diminution de la surface totale des empreintes digitales au fil du temps ; et
(c) à évaluer et améliorer la performance de l'estompage des empreintes digitales en fonction des résultats de calcul.

16. Procédé selon la revendication 14 ou 15, dans lequel le nombre de gouttelettes d'empreintes digitales diminue de plus de 30% après 10 minutes, de plus de 52% après 1 heure, ou de plus de 73% après 6 heures.

17. Procédé selon la revendication 14 ou 15, dans lequel la surface totale des gouttelettes d'empreintes digitales diminue de plus de 1% après 10 minutes, de plus de 5% après 10 minutes, ou de plus de 13% après 6 heures.

18. Procédé d'évaluation et d'amélioration de la performance anti-empreintes digitales d'une couche de revêtement selon l'une quelconque des revendications 7 à 12, comprenant les étapes consistant :
(a) à mettre en contact de l'eau ou de l'huile avec la couche de revêtement pour former une goutte sur celle-ci ;
(b) à enregistrer et calculer l'augmentation du diamètre de base, la diminution de la hauteur et la diminution de l'angle de contact de la goutte au fil du temps ; et
(c) à évaluer et améliorer la performance de diffusion et d'estompage en fonction des résultats de calcul.

19. Article revêtu d'une couche de revêtement selon l'une quelconque des revendications 7 à 12.

20. Article selon la revendication 19, dans lequel l'article est choisi dans le groupe comprenant des dispositifs électroniques grand public comportant des téléphones portables, des tablettes, des ordinateurs personnels, des ordinateurs portables, des lecteurs électroniques, des lecteurs de musique, des accessoires informatiques, des téléviseurs, des consoles de jeux, des dispositifs de système mondial de localisation, des dispositifs pouvant être portés ; ainsi que des pièces automobiles ; et des appareils ménagers.
